# EUROPÄISCHE PATENTSCHRIFT

(11) **EP 3 992 684 B1**
(45) Veröffentlichungstag und Bekanntmachung des Hinweises auf die Patenterteilung: **04.12.2024**
(21) Anmeldenummer: 21204660.1
(22) Anmeldetag: 26.10.2021
(51) Int. Cl.: G02B 6/44, G02B 6/38

(54) **ADAPTERVORRICHTUNG ZUM MOBILEN HERSTELLEN EINER LICHTLEITENDEN VERBINDUNG, SYSTEM SOWIE VERFAHREN**
ADAPTER DEVICE FOR THE MOBILE MANUFACTURING OF A LIGHT-CONDUCTING CONNECTION, SYSTEM AND METHOD
DISPOSITIF ADAPTATEUR PERMETTANT D'ÉTABLIR DE MANIÈRE MOBILE UNE CONNEXION DE GUIDAGE LUMINEUX, SYSTÈME, AINSI QUE PROCÉDÉ

(30) Priorität: 29.10.2020 DE 102020128520
(43) Veröffentlichungstag der Anmeldung: 04.05.2022
(73) Patentinhaber: Westnetz GmbH, 44139 Dortmund (DE)
(72) Erfinder: Beck, Björn, 44581 Castrop-Rauxel (DE)
(74) Vertreter: Bals & Vogel Patentanwälte PartGmbB

(56) Entgegenhaltungen:
- CN-A- 101 825 755
- CN-Y- 201 212 921
- US-A1- 2009 097 845
- US-A1- 2017 212 321

## Beschreibung

Die Erfindung betrifft eine Adaptervorrichtung zum mobilen Herstellen einer lichtleitenden Verbindung eines ersten optischen Zugangspunktes eines optischen Netzes, insbesondere in Form eines Glasfasernetzes, zum Anschluss einer ersten Netzanschlussart mit einem optischen Verbindungsanschluss eines Gerätes zum Anschluss einer Geräteanschlussart, ein System mit einem Gerät und einer Adaptervorrichtung sowie ein Verfahren zum mobilen Herstellen einer lichtleitenden Verbindung eines ersten optischen Zugangspunktes mit einem Verbindungsanschluss.

Bei der Wartung von Glasfasernetzen, wie z. B. FTTX-Netzen, ist häufig notwendig, ein externes Gerät in Form eines Messgerätes an einzelne Fasern des Glaserfasernetzes anzuschließen, um Parameter des jeweiligen Glasfasernetzes zu messen bzw. zu prüfen. Dabei kann z. B. ein Optical-Time-Domain-Reflextory-Verfahren (OTDR) eingesetzt werden, wobei über einen Testimpuls Kabelbrüche, Spleiß oder ähnliche Defekte erkannt werden können. Je nach Zugangspunkt zum Glasfasernetz ist es dabei üblich, unterschiedliche Steckverbinderarten zu nutzen. Beispielsweise kann sich ein Steckverbinder eines Zugangspunktes auf der Strecke des Glaserfasernetzes von einem Steckverbinder eines Zugangspunktes in einem Haushalt unterscheiden. Da das Messgerät in der Regel nur einen Anschluss hat, sind in der Regel Adapterkabel notwendig, um das Messgerät an die jeweilige Steckverbinderart anzuschließen. Als lose Sammlung sind derartige Adapterkabel jedoch häufig schlecht zu transportieren. Ferner muss an jedem Zugangspunkt das zugeordnete Adapterkabel mit der korrekten Steckerpaarung in der Sammlung gefunden werden, was mit zunehmender Größe der Sammlung zeitaufwendig ist. Dokument CN 201212921Y offenbart eine tragbare Glasfaserkabel-Verteilerbox aus dem technischen Bereich der Glasfaserkommunikation.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Wartung eines optischen Netzes, vorzugsweise mehrerer unterschiedlicher optischer Netze, zu vereinfachen und das Mitführen von Ausrüstung für die Wartung zu erleichtern.

Die voranstehende Aufgabe wird gelöst durch eine Adaptervorrichtung mit den Merkmalen des Anspruchs 1, ein System mit den Merkmalen des Anspruchs 14, sowie ein Verfahren mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Adaptervorrichtung beschrieben sind, selbstverständlich auch im Zusammenhang mit dem erfindungsgemäßen System und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Adaptervorrichtung zum Herstellen einer lichtleitenden Verbindung eines ersten optischen Zugangspunktes eines optischen Netzes, insbesondere in Form eines Glasfasernetzes, zum Anschluss einer ersten Netzanschlussart mit einem optischen Verbindungsanschluss eines Gerätes zum Anschluss einer Geräteanschlussart vorgesehen. Die Adaptervorrichtung weist eine Netzanschlusseinheit auf. Die Netzanschlusseinheit umfasst ferner einen ersten Netzanschluss der ersten Netzanschlussart zur lichtleitenden Verbindung mit dem ersten Zugangspunkt, und einen zweiten Netzanschluss einer zweiten Netzanschlussart zur lichtleitenden Verbindung mit einem zweiten optischen Zugangspunkt. Weiterhin weist die Adaptervorrichtung eine Geräteanschlusseinheit mit zumindest einem Geräteanschluss der Geräteanschlussart zur lichtleitenden Verbindung mit dem Gerät auf. Ferner weist die Adaptervorrichtung eine Trägereinheit, an welcher der erste und der zweite Netzanschluss und der Geräteanschluss angeordnet sind, auf. Der erste und zweite Netzanschluss sind durch jeweils zumindest eine Verbindungsstrecke mit der Geräteanschlusseinheit lichtleitend verbunden.

Unter dem mobilen Herstellen der Verbindung kann insbesondere verstanden werden, dass die Adaptervorrichtung mobil einsetzbar ist, d.h. vorzugsweise zwischen den optischen Zugangspunkten mitgeführt und/oder bewegt werden. Insbesondere handelt es sich bei der Adaptervorrichtung um eine mobile Adaptervorrichtung. Dazu kann die Adaptervorrichtung, insbesondere die Trägereinheit, beispielsweise tragbar und/oder bewegbar sein. Bei dem optischen Netz kann es sich vorzugsweise um ein Netz zur optischen Datenübertragung, insbesondere in Form eines FTTX-Netzes, handeln. Weiterhin kann das optische Netz Teil einer, insbesondere öffentlichen, Infrastruktur sein. Der erste und der zweite Zugangspunkt können unterschiedliche Zugangspunkte zu demselben optischen Netz oder zu unterschiedlichen optischen Netzen bilden. Bei dem Gerät kann es sich beispielsweise um ein Prüf- und/oder Messgerät zur Wartung des optischen Netzes handeln. Der optische Verbindungsanschluss kann vorzugsweise an einem Gerätegehäuse des Gerätes angeordnet sein. Gemäß der beanspruchten Erfindung unterscheiden sich die erste und zweite Netzanschlussart, d. h. beispielsweise auch der erste und der zweite Zugangspunkt, voneinander. Vorzugsweise können der erste und/oder zweite Zugangspunkt und/oder der Verbindungsanschluss durch jeweils einen Steckverbinder gebildet sein. Dabei können sich die erste und zweite Netzanschlussart beispielsweise in einer Form der Steckverbinder unterscheiden.

Die jeweiligen Anschlussarten, d. h. insbesondere die Netzanschlussarten und die Geräteanschlussarten können eine Buchse und/oder einen Stecker umfassen. Insbesondere kann für jede der Anschlussarten eine Buchse und ein Stecker vorgesehen sein, die komplementär zueinander ausgebildet sind. So ist es denkbar, dass der erste Zugangspunkt einen Stecker und der erste Netzanschluss eine Buchse der ersten Netzanschlussart aufweist. Ebenso ist es denkbar, dass der erste Zugangspunkt und der erste Netzanschluss beispielsweise eine Buchse der ersten Netzanschlussart aufweisen und die Verbindung zwischen dem ersten Zugangspunkt und dem ersten Netzanschluss durch ein Verbindungsmittel, z. B. in Form eines Verbindungskabels, herstellbar ist, welches beidendig einen Stecker der ersten Netzanschlussart aufweist. Die Geräteanschlussart entspricht vorzugsweise einem Verbindungsstandard gemäß E2000. Dabei kann der Verbindungsstandard beispielsweise mit einem Steckverbinder oder in einer Duplex-Ausführung mit zwei Steckverbindern vorgesehen sein.

Die Verbindung des ersten Netzanschlusses mit dem ersten Zugangspunkt und die Verbindung des zweiten Netzanschlusses mit dem zweiten Zugangspunkt kann mittelbar oder unmittelbar herstellbar sein. Wenn der erste und/oder zweite Zugangspunkt flexibel ausgestaltet ist, kann der erste und/oder zweite Netzanschluss der Netzanschlusseinheit dazu ausgebildet sein, direkt mit dem ersten und/oder zweiten Zugangspunkt verbunden zu werden. Es ist jedoch ebenfalls denkbar, dass der erste und/oder zweite Netzanschluss durch ein Verbindungsmittel mit dem ersten und/oder zweiten Zugangspunkt verbindbar ist.

Zum Herstellen der lichtleitenden Verbindung handelt es sich insbesondere bei den Netzanschlüssen und dem Geräteanschluss um optische Anschlüsse. Die Verbindungsstrecke kann z. B. zumindest einen Lichtwellenleiter umfassen, um eine lichtleitende Verbindung zwischen dem ersten und zweiten Netzanschluss und der Geräteschlusseinheit auszubilden. Ferner können die Netzanschlüsse und/oder der Geräteanschluss mit optischen Fasern, insbesondere Glasfasern, zum Leiten von Licht verbunden sein. Vorzugsweise kann die Verbindungsstrecke zur bidirektionalen Lichtleitung ausgebildet sein. Die Verbindungsstrecke kann vorteilhafterweise einen Teil einer Vorlauflänge und/oder einer Nachlauflänge, insbesondere mit einer Länge von bis zu 20 m, bilden.

Durch die Verbindung des ersten und zweiten Netzanschlusses mit der Geräteanschlusseinheit können der erste und/oder der zweite Netzanschluss dauerhaft mit dem Geräteanschluss oder mit jeweils einem Geräteanschluss verbunden sein. Es ist jedoch ebenso denkbar, dass die Geräteanschlusseinheit einen Zwischenanschluss aufweist, über den, insbesondere wahlweise, der erste und/oder zweite Netzanschluss mit dem Geräteanschluss verbindbar ist. Weiterhin kann vorgesehen sein, dass lediglich ein Geräteanschluss der Geräteeinheit vorgesehen ist, der wahlweise mit den Verbindungsstrecken lichtleitend verbindbar ist.

Die Trägereinheit kann einstückig durch einen Trägerkörper ausgebildet sein. Ebenfalls ist es denkbar, dass die Trägereinheit modular ausgebildet ist. Beispielsweise kann die Netzanschlusseinheit mehrere, insbesondere austauschbare, Module umfassen, die jeweils zumindest einen Netzanschluss einer anderen Netzanschlussart aufweisen. Vorzugsweise ist die Trägereinheit plattenartig ausgebildet. Dadurch kann eine kostengünstige Herstellung der Trägereinheit ermöglicht sein. Weiterhin ist es denkbar, dass die Trägereinheit ein Metall, vorzugsweise ein Aluminium, aufweist. Dadurch kann eine hohe Stabilität beim Ortswechsel für die Wartung des optischen Netzes ermöglicht sein.

Insbesondere da sich der erste und zweite Zugangspunkt in der Netzanschlussart unterscheiden, ist es von Vorteil, dass die Netzanschlusseinheit den ersten Netzanschluss für die erste Netzanschlussart für die Verbindung mit dem ersten Zugangspunkt und den zweiten Netzanschluss für die zweite Netzanschlussart für die Verbindung mit dem zweiten Zugangspunkt aufweist. Somit bietet die Adaptervorrichtung eine Vereinfachung der Wartung des optischen Netzes, indem der die Wartungsarbeiten ausführende Monteur für die beiden unterschiedlichen Netze die Adaptervorrichtung verwenden kann. Durch die Trägereinheit können die verschiedenen Netzanschlüsse gemeinsam ferner einfach transportabel sein.

Weiterhin kann bei einer erfindungsgemäßen Adaptervorrichtung vorteilhafterweise vorgesehen sein, dass die Geräteanschlusseinheit eine Streckenverlängerung zur Verlängerung eines Lichtlaufs der Verbindungsstrecken, vorzugsweise von den Verbindungsstrecken zum Geräteanschluss zur Verbindung mit dem Gerät, aufweist, insbesondere wobei die Streckenverlängerung als optische Vorlaufstrecke und/oder als optische Nachlaufstrecke ausgestaltet ist. Zur Ausgestaltung als Vorlaufstrecke und/oder Nachlaufstrecke kann die Streckenverlängerung eine optische Faser aufweisen, die die Verlängerung des Lichtlaufs ermöglicht. Die Streckenverlängerung kann beispielsweise an einer zweiten Seite der Trägereinheit, insbesondere unterhalb der Netzanschlüsse, aufgewickelt sein, insbesondere um eine Transportabilität der Adaptervorrichtung zu begünstigen. Die Streckenverlängerung kann mit dem ersten und/oder zweiten Netzanschluss verbunden oder verbindbar sein. Insbesondere ist es denkbar, dass jedem der Netzanschlüsse der Netzanschlusseinheit eine Streckenverlängerung zugeordnet ist.

Durch die Streckenverlängerung kann ein Messfehler im Bereich des Geräteanschlusses, insbesondere bei Durchführung eines OTDR-Verfahrens, reduziert sein. Insbesondere kann dadurch ein Messverfahren zur Wartung des optischen Netzes auch im Bereich des ersten Netzanschlusses eine hohe Genauigkeit aufweisen. Vorzugsweise kann die Verlängerung des Lichtlaufs durch die Streckenverlängerung größer oder gleich 100 m, besonders bevorzugt größer oder gleich 1000 m sein.

Vorzugsweise kann bei einer erfindungsgemäßen Adaptervorrichtung vorgesehen sein, dass die Streckenverlängerung einen Zwischenanschluss, vorzugsweise der Geräteanschlussart, aufweist, durch den die Streckenverlängerung wahlweise mit einer der Verbindungsstrecken verbindbar ist, und/oder dass durch einen Endanschluss der Streckenverlängerung ein Geräteanschluss, d. h. insbesondere der mit der Verbindungsstrecke verbundene Geräteanschluss oder ein weiterer mit der Verbindungsstrecke verbindbarer Geräteanschluss, zur lichtleitenden Verbindung mit dem Gerät gebildet ist. Insbesondere kann die Streckenverlängerung durch den Zwischenanschluss umsteckbar sein, um die Streckenverlängerung mit einem der Netzanschlüsse zu verbinden. Vorzugsweise kann der Zwischenanschluss mit einem anderen Geräteanschluss der Geräteanschlusseinheit verbindbar sein. Dadurch kann ein Geräteanschluss der Geräteanschlusseinheit, der durch die Verbindungsstrecke mit dem ersten und/oder zweiten Netzanschluss verbunden ist, wahlweise zur Verbindung mit dem Zwischenanschluss und/oder zur Verbindung mit dem Gerät genutzt werden. Vorzugsweise kann der Endanschluss der Streckenverlängerung zur Verbindung mit dem Gerät genutzt werden, wenn der mit dem ersten und/oder zweiten Netzanschluss verbundene Geräteanschluss als Endanschluss für die Streckenverlängerung dient. Somit kann durch ein einfaches Umstecken die Streckenverlängerung wahlweise einsetzbar sein. Insbesondere kann der Zwischenanschluss mit einem Geräteanschluss durch ein Verbindungsmittel, vorzugsweise durch ein optisches Kabel, verbindbar sein, um die Verbindung zu dem ersten und/oder zweiten Netzanschluss herzustellen.

Weiterhin kann bei einer erfindungsgemäßen Adaptervorrichtung vorteilhafterweise vorgesehen sein, dass ein tragbares Gehäuse vorgesehen ist, in welchem die Trägereinheit angeordnet ist, insbesondere wobei das Gehäuse, vorzugsweise im Wesentlichen oder vollständig, aus einem Kunststoff ausgebildet ist. Beispielsweise kann der Kunststoff ein Polypropylen sein. Durch das Gehäuse kann ein Schutz der Trägereinheit und der optischen Komponenten vor Umwelteinflüssen insbesondere beim Transport gegeben sein.

Vorzugsweise ist die Trägereinheit als, insbesondere modularer, Gehäuseeinsatz für das Gehäuse ausgebildet. Dazu kann die Trägereinheit komplementär zum Gehäuse ausgebildet sein und/oder in das Gehäuse eingepasst sein. Ferner kann die Trägereinheit am Gehäuse befestigt sein, insbesondere mit dem Gehäuse verschraubt sein. Für eine hohe Transportabilität kann das Gehäuse Außenabmessungen von weniger oder gleich 500 x 400 x 250 mm, vorzugsweise von weniger oder gleich 400 x 300 x 200 mm aufweisen. Durch die Ausbildung aus Kunststoff kann ferner ein Gewicht des Gehäuses gering ausgestaltet sein. Es ist denkbar, dass das Gehäuse Metallkomponenten aufweist. Beispielsweise kann das Gehäuse eine Verschlusseinheit aufweisen, durch welche das Gehäuse verschließbar ist.

Vorzugsweise kann bei einer erfindungsgemäßen Adaptervorrichtung vorgesehen sein, dass das Gehäuse ein Bodenelement, an welchem die Trägereinheit angeordnet ist, und ein Deckelelement, welches zum Zugang zur Trägereinheit zumindest teilweise vom Bodenelement entfernbar ist, aufweist, insbesondere wobei das Bodenelement und die Trägereinheit einen Hohlraum bilden. Beispielsweise kann die Verbindungsstrecke zumindest teilweise im Hohlraum angeordnet sein, vorzugsweise so dass lediglich die Netzanschlüsse und der oder die Geräteanschlüsse von außen zugänglich sind. Der Hohlraum kann versiegelt sein, so dass ein unbefugter Zugang nachträglich nachweisbar ist. Das Deckelelement kann gelenkig am Bodenelement befestigt sein. Weiterhin ist es denkbar, dass das Gehäuse einen Tragegriff aufweist. Insbesondere kann das Gehäuse als Koffer ausgestaltet sein. Dadurch kann ein hoher Tragekomfort der Adaptervorrichtung ermöglicht sein, so dass ein Mitführen der Adaptervorrichtung erleichtert ist.

Vorzugsweise kann bei einer erfindungsgemäßen Adaptervorrichtung vorgesehen sein, dass das Gehäuse, vorzugsweise das Deckelelement, zumindest ein Staufach zur Aufnahme loser Zubehörteile aufweist. In das Staufach können die Zubehörteile lose einlegbar sein. Die Zubehörteile können beispielsweise zusätzliche Verbindungskabel oder weiteres Werkzeug umfassen. Ferner ist es denkbar, dass die Zubehörteile in dem Staufach gegen Herausfallen sicherbar, insbesondere befestigbar, sind. Beispielsweise kann das Staufach eine verschließbare Öffnung aufweisen, welche das Herausfallen der Zubehörteile verhindert. Das Staufach kann flexibel oder starr ausgestaltet sein. Beispielsweise kann das Staufach eine Wandung aus einem Textil und/oder aus Kunststoff aufweisen. Das Staufach kann vorteilhafterweise in das Deckelelement integriert sein. Es ist jedoch ebenso denkbar, dass das Staufach in das Bodenelement integriert ist, vorzugsweise sich zumindest teilweise oder vollständig in den Hohlraum erstreckt. Weiterhin kann vorgesehen sein, dass das Staufach als Gehäuseeinsatz und/oder als 3D-Druckteil ausgebildet ist.

Weiterhin kann bei einer erfindungsgemäßen Adaptervorrichtung vorteilhafterweise vorgesehen sein, dass die Netzanschlüsse der Netzanschlusseinheit und/oder der zumindest eine Geräteanschluss jeweils ein lösbares Abdeckmittel zum Schutz vor Umwelteinflüssen aufweisen. Vorzugsweise können sämtliche Geräteanschlüsse jeweils ein lösbares Abdeckmittel aufweisen. Durch das Abdeckmittel kann ein Eindringen von Staub verhindert werden. Insbesondere kann das Abdeckmittel kappenartig ausgestaltet sein. Somit kann das Abdeckmittel bei Nutzung des jeweiligen Netzanschlusses oder Geräteanschlusses abnehmbar sein, um den Netzanschluss oder Geräteanschluss freizugeben. Dadurch können nicht genutzte Geräteanschlüsse und/oder Netzanschlüsse weiterhin vor Staub geschützt bleiben. Die Trägereinheit kann ferner vorteilhafterweise eine Ablagefläche zur Ablage der Abdeckmittel aufweisen und/oder bilden. Dadurch können die abgenommenen Abdeckmittel gesammelt werden, um beim Betrieb der Adaptervorrichtung nicht verloren zu gehen.

Es ist ferner bei einer erfindungsgemäßen Adaptervorrichtung denkbar, dass an der Trägereinheit mehrere weitere Netzanschlüsse unterschiedlicher, weiterer Netzanschlussarten vorgesehen sind, wobei jeder der weiteren Netzanschlüsse durch jeweils eine weitere Verbindungsstrecke mit der Geräteanschlusseinheit verbunden ist. Insbesondere ist es auch denkbar, dass die Netzanschlusseinheit je Netzanschlussart zwei oder mehr gleichartige Netzanschlüsse aufweist. Beispielsweise können die Netzanschlüsse der gleichen Netzanschlussart paarweise an der Trägereinheit angeordnet sein. Vorzugsweise kann die Gruppe der Netzanschlussarten, umfassend die erste Netzanschlussart, die zweite Netzanschlussart und/oder die weiteren Netzanschlussarten, zumindest einen Verbindungsstandard gemäß E2000, zumindest einen Verbindungsstandard gemäß DIN, zumindest einen Verbindungsstandard gemäß LC, insbesondere LC-duplex, (lucent connector) und/oder zumindest einen Verbindungsstandard gemäß SC, insbesondere SC-duplex, (subscriber connector) umfassen. Der jeweilige Verbindungsstandard kann beispielsweise in einfacher oder in Duplex-Ausführung vorgesehen sein. Weiterhin ist es denkbar, dass die erste Netzanschlussart, die zweite Netzanschlussart und/oder die weiteren Netzanschlussarten, zumindest einen Verbindungsstandard beispielsweise gemäß F-SMA, FC, ST, ESCON, MIC, Mini-SC, URM, MTRJ, MPO/MTP, M12 und/oder TOSLINK umfassen.

Weiterhin kann bei einer erfindungsgemäßen Adaptervorrichtung vorteilhafterweise vorgesehen sein, dass die Geräteanschlusseinheit zwei oder mehr Geräteanschlüsse der Geräteanschlussart aufweist, wobei von jedem der Netzanschlüsse der Netzanschlusseinheit eine Verbindungsstrecke zu zumindest einem der Geräteanschlüsse der Geräteanschlusseinheit vorgesehen ist. Dadurch kann in einfacher Art und Weise eine Nutzung des gewünschten Netzanschlusses der Netzanschlusseinheit durch den Anschluss des Gerätes am entsprechend zugeordneten Geräteanschluss erfolgen. Insbesondere kann dadurch eine Vielzahl unterschiedlicher Anschlussmöglichkeiten durch die Adaptervorrichtung bereitgestellt werden. Weiterhin ist eine komplizierte Umschaltung nicht notwendig. Jede der Verbindungsstrecken kann ferner ein separates Verbindungsmittel aufweisen. Die Verbindungsstrecken und/oder die Streckenverlängerung können im Hohlraum des Gehäuses geschützt angeordnet sein.

Es ist ferner bei einer erfindungsgemäßen Adaptervorrichtung denkbar, dass an der Trägereinheit eine Lichtquelle, vorzugsweise in Form einer Laserlichtquelle, zum Einspeisen von Licht in das optische Netz vorgesehen ist, insbesondere wobei die Lichtquelle mit einem Lichtanschluss verbunden ist, der gemäß der Geräteanschlussart ausgebildet ist, so dass Licht der Lichtquelle über den Lichtanschluss übertragbar ist. Insbesondere kann die Lichtquelle in den Lichtanschluss integriert sein. Die Lichtquelle kann mit einer Elektronik zum Betreiben der Lichtquelle verbunden sein. Die Elektronik kann vorzugsweise im Hohlraum des Gehäuses angeordnet sein. Weiterhin kann die Elektronik mit einem Schalter verbunden sein, der an der Trägereinheit angeordnet ist. Dadurch kann die Lichtquelle aktivierbar und/oder deaktivierbar sein. Vorzugsweise ist die Lichtquelle zum Aussenden von Laserlicht, insbesondere in Form eines Rotlasers, ausgebildet. Durch die Lichtquelle können angeschlossene optische Fasern beleuchtet werden, so dass eine einfache Durchgangsprüfung ermöglicht ist und/oder ggf. vorliegende Defekte einfach aufgefunden werden können. Dadurch, dass der Lichtanschluss gemäß der Geräteanschlussart ausgebildet ist, kann eine Verbindung der Lichtquelle zum optischen Netz über die Geräteanschlusseinheit und die Netzanschlusseinheit erzielt werden. Dabei kann das Messgerät von der Adaptervorrichtung getrennt sein.

Vorzugsweise kann bei einer erfindungsgemäßen Adaptervorrichtung vorgesehen sein, dass eine Energieversorgungseinheit zur mobilen Energieversorgung der Lichtquelle vorgesehen ist, insbesondere wobei das Gehäuse eine Zugangsöffnung zum Zugang zur Energieversorgungseinheit aufweist. Die Energieversorgungseinheit kann vorzugsweise eine Energiequelle, z. B. in Form zumindest einer Batterie, umfassen. Dadurch kann in einfacher Art und Weise eine Stromversorgung der Lichtquelle und damit ein mobiler Einsatz ermöglicht sein. Durch die Zugangsöffnung kann ein einfacher Batterieaustausch erfolgen. Zusätzlich oder alternativ kann die Energieversorgungseinheit eine Ladeeinheit zum Aufladen der Energieversorgungseinheit mit elektrischer Energie umfassen. Beispielsweise kann eine wiederaufladbare Batterie oder ein Akku vorgesehen sein, um die Energie zum Betrieb der Lichtquelle bereitzustellen. Dabei kann die Ladeeinheit über die Zugangsöffnung zugänglich sein, um z. B. ein Ladekabel anzuschließen. Zusätzlich oder alternativ kann die Adaptervorrichtung zur Stromversorgung der Lichtquelle einen Kabelanschluss zur Verbindung mit einem Stromnetz aufweisen.

Im Rahmen der Erfindung ist es ferner denkbar, dass die Trägereinheit eine erste Seite, an welcher die Netzanschlüsse der Netzanschlusseinheit und der zumindest eine Geräteanschluss der Geräteanschlusseinheit angeordnet sind, und eine zweite Seite, an welcher die Verbindungsstrecken und/oder die Lichtquelle angeordnet sind, aufweist. Beispielsweise können die Netzanschlüsse der Netzanschlusseinheit und der zumindest eine Geräteanschluss der Geräteanschlusseinheit von der zweiten Seite in die Trägereinheit eingesteckt sein und an der ersten Seite hervorstehen. Die erste Seite kann insbesondere eine Sichtseite bilden, die beim Öffnen des Deckelelementes des Gehäuses sichtbar ist. Durch die Anordnung der Verbindungsstrecken und/oder der Lichtquelle an der zweiten Seite können diese Komponenten vor Umwelteinflüssen und/oder unbeabsichtigtem Verhalten eines Benutzers geschützt sein. Insbesondere kann die zweite Seite dem Hohlraum des Gehäuses zugewandt sein. Die erste Seite kann dem Deckelelement zugewandt sein.

Vorzugsweise kann bei einer erfindungsgemäßen Adaptervorrichtung vorgesehen sein, dass die Trägereinheit als Informationsträger mit Informationen zum Hinweis auf eine Bedienung der Adaptervorrichtung ausgebildet ist, insbesondere wobei die Informationen als Vertiefungen in die Trägereinheit eingebracht sind. Die Informationen können insbesondere Informationen über die Geräteanschlussart der Geräteanschlüsse und/oder die Netzanschlussart der jeweiligen Netzanschlüsse umfassen. Insbesondere können die Informationen auf der ersten Seite der Trägereinheit vorgesehen sein. Die Vertiefungen können z. B. gefräst oder gelasert sein. Dadurch kann auch in Umgebungen mit hohem Staubaufkommen eine gute Ablesbarkeit der Informationen gewährleistet sein.

Gemäß einem weiteren Aspekt der Erfindung ist ein System vorgesehen. Das System umfasst ein Gerät mit einem optischen Verbindungsanschluss zum Anschluss einer Geräteanschlussart und eine erfindungsgemäße Adaptervorrichtung zum mobilen Herstellen einer lichtleitenden Verbindung eines ersten optischen Zugangspunktes eines optischen Netzes, insbesondere in Form eines Glasfasernetzes, zum Anschluss einer ersten Netzanschlussart mit dem Verbindungsanschluss des Gerätes.

Somit bringt ein erfindungsgemäßes System die gleichen Vorteile mit sich, wie sie bereits ausführlich mit Bezug auf eine erfindungsgemäße Adaptervorrichtung beschrieben worden sind. Bei dem Gerät kann es sich z. B. um ein Messgerät, vorzugsweise zur Durchführung eines Optical-Time-Domain-Reflextory-Verfahrens (OTDR), handeln. Somit kann das optische Netz in einfacher Art und Weise gewartet werden, wobei die Adaptervorrichtung anschließend zu einem zweiten optischen Zugangspunkt mitgeführt werden kann. Dabei kann die gleiche Verbindung des Messgerätes mit der Adaptervorrichtung für unterschiedliche Netzanschlussarten verwendet werden. Weiterhin ist es denkbar, dass der erste und/oder zweite Zugangspunkt und/oder das optische Netz Teil des erfindungsgemäßen Systems ist.

Gemäß einem weiteren Aspekt der Erfindung ist ein Verfahren zum mobilen Herstellen einer lichtleitenden Verbindung eines ersten optischen Zugangspunktes zum Anschluss einer ersten Netzanschlussart mit einem Verbindungsanschluss einer Geräteanschlussart eines Gerätes vorgesehen. Das Verfahren umfasst die folgenden Schritte:
- Verbinden des ersten Zugangspunktes mit einer erfindungsgemäßen Adaptervorrichtung,
- Verbinden der Adaptervorrichtung mit dem Verbindungsanschluss des Gerätes.

Somit bringt ein erfindungsgemäßes Verfahren die gleichen Vorteile mit sich, wie sie bereits ausführlich mit Bezug auf eine erfindungsgemäße Adaptervorrichtung und/oder ein erfindungsgemäßes System beschrieben worden sind. Beim Verbinden des ersten Zugangspunktes und bei dem Verbinden der Adaptervorrichtung handelt es sich insbesondere um ein lichtleitendes Verbinden, vorzugsweise bei welchem eine optische Verbindung, z.B. über optische Fasern, hergestellt wird. Beim Verbinden des ersten Zugangspunktes mit der Adaptervorrichtung kann ein Steckverbinder mit dem ersten Zugangspunkt und einem ersten Netzanschluss der Adaptervorrichtung lichtleitend verbunden werden. Beim Verbinden der Adaptervorrichtung mit dem Verbindungsanschluss des Gerätes kann der Verbindungsanschluss mit einem Geräteanschluss der Adaptervorrichtung lichtleitend verbunden werden. Dadurch kann in einfacher Art und Weise die Geräteanschlussart von der Netzanschlussart entkoppelt sein, insbesondere wobei der Zugangspunkt und der Verbindungsanschluss unabhängig voneinander mit der Adaptervorrichtung verbunden werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen schematisch:
- Figur 1: ein erfindungsgemäßes System mit einer erfindungsgemäßen Adaptervorrichtung in einem ersten Ausführungsbeispiel in einer Draufsicht,
- Figur 2: die Adaptervorrichtung mit Zuschaltung einer Streckenverlängerung,
- Figur 3: eine Verbindung einer Lichtquelle der Adaptervorrichtung mit einem optischen Netz,
- Figur 4+5: die Adaptervorrichtung in einer geschnittenen Seitenansicht, und
- Figur 6: ein Geräteanschluss der Adaptervorrichtung.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

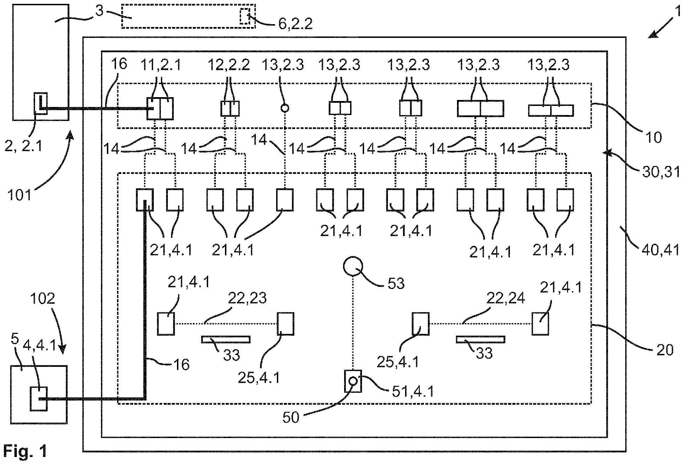

Figur 1 zeigt ein erfindungsgemäßes System mit einer erfindungsgemäßen Adaptervorrichtung 1 zum mobilen Herstellen einer lichtleitenden Verbindung zwischen einem optischen Netz 3 und einem Gerät 5 in einer Draufsicht. Bei dem optischen Netz 3 handelt es sich um einen Teil einer, insbesondere öffentlichen, Infrastruktur zur Datenübertragung, vorzugsweise um ein Glasfasernetz. Bei dem Gerät 5 handelt es sich insbesondere um ein Messgerät zur Wartung des optischen Netzes 3.

Das optische Netz 3 weist einen ersten Zugangspunkt 2 zum Anschluss einer optischen ersten Netzanschlussart 2.1 auf. Das Gerät 5 weist einen optischen Verbindungsanschluss 4 zum Anschluss einer Geräteanschlussart 4.1 auf. Somit ist der erste Zugangspunkt 2 selbst von der ersten Netzanschlussart 2.1 und der Verbindungsanschluss 4 von der Geräteanschlussart 4.1, wobei sich die erste Netzanschlussart 2.1 und die Geräteanschlussart 4.1 insbesondere unterscheiden. Weiterhin ist ein zweiter optischer Zugangspunkt 6 einer zweiten Netzanschlussart 2.2 gezeigt, an welchem das Gerät 5 ebenfalls zur Wartung angeschlossen werden kann. Dabei unterscheiden sich die erste und zweite Netzanschlussart 2.1, 2.2, beispielsweise indem unterschiedliche Standards von Steckverbindern vorgesehen sind. Der zweite Zugangspunkt 6 kann einen weiteren Zugangspunkt des gleichen optischen Netzes 3 oder eines weiteren optischen Netzes 3 bilden. Durch die Adaptervorrichtung 1 können beide Netzanschlussarten 2.1, 2.2 mit dem Verbindungsanschluss 4 des Gerätes 5 verbunden werden.

Dazu weist die Adaptervorrichtung 1 eine Netzanschlusseinheit 10 mit mehreren Netzanschlüssen 11, 12, 13 zum Anschluss unterschiedlicher Netzanschlussarten 2.1, 2.2, 2.3 auf. Beispielsweise ist ein erster Netzanschluss 11, der gemäß der ersten Netzanschlussart 2.1 ausgebildet ist, und ein zweiter Netzanschluss 12, der gemäß der zweiten Netzanschlussart 2.2 ausgebildet ist, vorgesehen. Weiterhin sind an der Trägereinheit 30 mehrere weitere Netzanschlüsse 13 unterschiedlicher, weiterer Netzanschlussarten 2.3 angeordnet. Vorzugsweise sind die Netzanschlüsse 11, 12, 13 paarweise mit gleichartigen Netzanschlüssen 11, 12, 13 angeordnet. Insbesondere kann die Adaptervorrichtung 1 über den ersten Netzanschluss 11 direkt mit dem ersten Zugangspunkt 2 verbunden werden, wenn der erste Zugangspunkt 2 beispielsweise ein flexibles Verbindungsmittel 16 aufweist. Alternativ kann ein flexibles Verbindungsmittel 16 vorgesehen sein, das an beiden Enden einen Stecker oder eine Buchse der ersten Netzanschlussart 2.1 aufweist, um den ersten Zugangspunkt 2 mit dem ersten Netzanschluss 11 der Adaptervorrichtung 1 zu verbinden.

Ferner weist die Adaptervorrichtung 1 eine Geräteanschlusseinheit 20 mit mehreren Geräteanschlüssen 21 auf, die gemäß der Geräteanschlussart 4.1 ausgebildet sind. Jeder der Netzanschlüsse 11, 12, 13 ist mit der Geräteanschlusseinheit 20 durch jeweils eine Verbindungsstrecke 14 lichtleitend verbunden. Insbesondere ist jedem der Netzanschlüsse 11, 12, 13 ein Geräteanschluss 21 zugeordnet. Die Verbindungsstrecken 14 umfassen insbesondere eine optische Verbindung. Beispielsweise können die Verbindungsstrecken 14 jeweils zumindest eine optische Faser umfassen, die jeden Netzanschluss 11, 12, 13 mit jeweils einem der Geräteanschlüsse 21 verbindet. Dadurch, dass die Geräteanschlüsse 21 gemäß der Geräteanschlussart 4.1 ausgebildet sind, kann das Gerät 5 direkt an einen der Geräteanschlüsse 21 angeschlossen werden, wenn der Verbindungsanschluss 4 des Gerätes 5 beispielsweise ein flexibles Verbindungsmittel 16 aufweist. Alternativ kann ein flexibles Verbindungsmittel 16 vorgesehen sein, das an beiden Enden einen Stecker oder eine Buchse der Geräteanschlussart 4.1 aufweist, um den Verbindungsanschluss 4 mit dem jeweiligen Geräteanschluss 21 der Adaptervorrichtung 1 zu verbinden. Ebenso ist es denkbar, dass die Verbindungsstrecken 14 zumindest teilweise ein flexibles Verbindungsmittel 16, z. B. in Form eines Kabels, aufweisen, an welchem der jeweilige Geräteanschluss 21 angeordnet ist.

Dadurch kann die Adaptervorrichtung 1 in einfacher Art und Weise mit dem Gerät 5 verbunden werden. Um nunmehr das Gerät 5 mit dem optischen Netz 3 zu verbinden kann der Benutzer den ersten Netzanschluss 11 der ersten Netzanschlussart 2.1 zur Verbindung mit dem optischen Netz 3 und den dem ersten Netzanschluss 11 zugeordneten Geräteanschlusses 21 der Geräteanschlussart 4.1 zur Verbindung mit dem Gerät 5 verwenden. Somit kann sowohl das Gerät 5, als auch das Netz 3 mit der jeweils eigenen Anschlussart, d. h. beispielsweise dem jeweils eigenen Anschlussstandard, an die Adaptervorrichtung 1 angeschlossen werden, so dass Adapterkabel mit unterschiedlichen Verbindungsstandards an beiden Enden vermieden werden können.

Ein erfindungsgemäßes Verfahren zum mobilen Herstellen einer lichtleitenden Verbindung des ersten Zugangspunktes 2 mit dem Verbindungsanschluss 4 des Gerätes 5 umfasst daher ein Verbinden 101 des ersten Zugangspunktes 2 mit der Adaptervorrichtung 1 und ein Verbinden 102 der Adaptervorrichtung 1 mit dem Verbindungsanschluss 4.

Ferner sind die Geräteanschlusseinheit 20 und die Netzanschlusseinheit 10 an einer Trägereinheit 30 angeordnet. Die Trägereinheit 30 ist insbesondere als plattenartiger Trägerkörper ausgebildet, vorzugsweise aus Aluminium. Es ist jedoch ebenso denkbar, dass die Trägereinheit 30 modular ausgebildet ist, um unterschiedliche Netzanschlüsse 11, 12, 13 für die Adaptervorrichtung 1 vorsehen zu können. Durch die Anordnung der Geräteanschlusseinheit 20 und der Netzanschlusseinheit 10 an der Trägereinheit 30, kann eine Transportabilität der Adaptervorrichtung 1 verbessert sein. Dazu ist ferner ein Gehäuse 40 vorgesehen, in welches die Trägereinheit 30 eingesetzt ist.

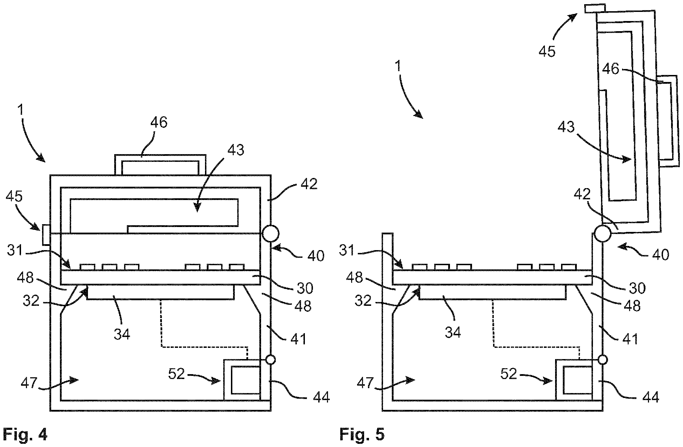

Das Gehäuse 40 ist in den Figuren 4 und 5 im Querschnitt dargestellt. Dabei weist das Gehäuse 40 ein Bodenelement 41 und ein Deckelelement 42 auf. Das Deckelelement 42 ist in Figur 4 in einer geschlossenen Position dargestellt und in Figur 5 in einer geöffneten Position. In der geöffneten Position ist das Deckelelement 42 zumindest teilweise vom Bodenelement 41 entfernt, so dass ein Zugang zur Trägereinheit 30 und damit insbesondere zur Netzanschlusseinheit 10 und zur Geräteanschlusseinheit 20 ermöglicht ist. Dazu kann das Deckelelement 42 gelenkig am Bodenelement 41 angeordnet sein. In der geschlossenen Position ist die Trägereinheit 30 durch das Gehäuse 40, insbesondere vollständig, geschützt. Weiterhin weist das Gehäuse 40 einen Verschluss 45 auf, durch welchen ein unbeabsichtigtes Öffnen des Deckelelementes 42 und/oder ein unbefugter Zugang zur Trägereinheit 30 verhinderbar ist. Das Deckelelement 42 umfasst vorzugsweise ferner ein Staufach 43, in welchem lose Zubehörteile aufnehmbar sind. Dadurch können weitere mitgeführte Utensilien, wie Werkzeuge oder dergleichen, mit der Adaptervorrichtung 1 mitgeführt werden. Die Trägereinheit 30 weist ferner eine erste Seite 31 auf, die dem Deckelelement 42 zugewandt ist und an welcher die Netzanschlüsse 11, 12, 13 und die Geräteanschlüsse 21 zugänglich sind. Gegenüberliegend zur ersten Seite 31 weist die Trägereinheit 30 eine zweite Seite 32 auf, die dem Bodenelement 41 zugewandt ist. Durch das Trägerelement 30 und das Gehäuse 40 ist ferner ein Hohlraum 47 an einer zweiten Seite 32 gebildet. In dem Hohlraum 47 kann z. B. eine Verkabelung 34 der Verbindungsstrecken 14 und/oder der Streckenverlängerungen 22 geschützt angeordnet sein. Für einen verbesserten Tragekomfort kann das Gehäuse 40 ferner einen Tragegriff 46 zum Tragen der Adaptervorrichtung 1 aufweisen. Zur Befestigung der Trägereinheit 30 am Gehäuse 40 weist das Gehäuse 40 ferner Befestigungsschnittstellen 48, vorzugsweise in Form von Vorsprüngen, auf. Die Trägereinheit 30 kann an den Befestigungsschnittstellen 48 beispielsweise mit dem Gehäuse 40 verschraubt sein.

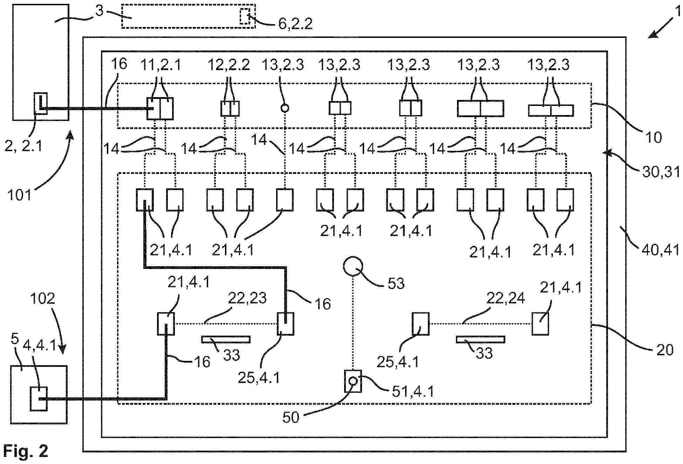

Weiterhin kann die Geräteanschlusseinheit 20 zumindest eine Streckenverlängerung 22 zur Verlängerung eines Lichtlaufs der Verbindungsstrecken 14 aufweisen. Die Streckenverlängerung 22 kann als optische Vorlaufstrecke 23 und/oder als optische Nachlaufstrecke 24 ausgebildet sein. Eine Verbindung des ersten Zugangspunktes 2mit dem Gerät 5 über die Streckenverlängerung 22 ist in Figur 2 dargestellt. Vorzugsweise sind zumindest eine Streckenverlängerung 22 als optische Vorlaufstrecke 23 und zumindest eine Streckenverlängerung 22 als optische Nachlaufstrecke 24 vorgesehen. Die Streckenverlängerung 22 kann zumindest eine optische Faser aufweisen, die den Lichtlauf zwischen dem Gerät 5 und dem Netz 3 verlängert. Vorzugsweise kann der Lichtlauf durch die Streckenverlängerung 22 um 100 m oder mehr, besonders bevorzugt um 1000 m oder mehr, verlängert werden. Die Streckenverlängerung 22 umfasst einen Geräteanschluss 21 der Geräteanschlussart 4.1, welcher einen Endanschluss der Streckenverlängerung 22 bildet und mit dem Gerät 5 verbindbar ist. Weiterhin umfasst die Streckenverlängerung 22 einen Zwischenanschluss 25 der Geräteanschlussart 4.1, welcher mit einem der weiteren Geräteanschlüsse 21, die mit den Netzanschlüssen 11, 12, 13 durch die Verbindungsstrecken 14 verbunden sind, verbindbar ist. Dazu kann ein Verbindungsmittel 16 vorgesehen sein, welches ein Benutzer nach Bedarf umstecken kann. Dadurch kann die Streckenverlängerung 22 zu jedem der Netzanschlüsse 11, 12, 13 der Netzanschlusseinheit 10 wahlweise zuschaltbar sein.

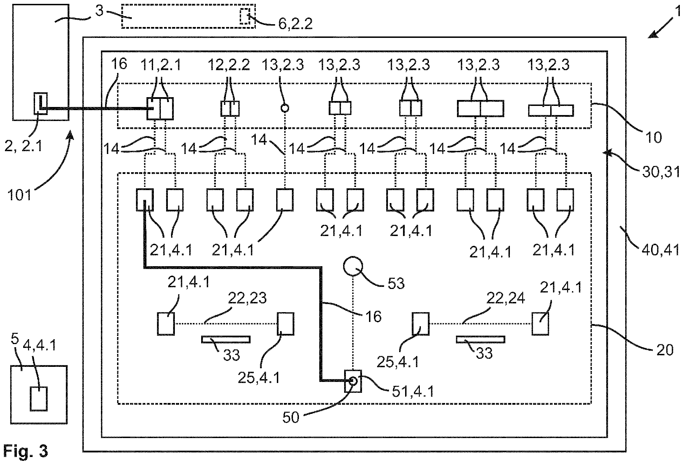

Weiterhin weist die Adaptervorrichtung 1 eine Lichtquelle 50, vorzugsweise in Form einer Laserlichtquelle, auf. Figur 3 zeigt eine Verschaltung der Lichtquelle 50 mit dem Netz 3. Die Lichtquelle 50 ist mit einem Lichtanschluss 51 verbunden, der gemäß der Geräteanschlussart 4.1 ausgebildet ist. Um das optischen Netz 3 mit der Lichtquelle 50 zu verbinden, so dass durch die Lichtquelle 50 Licht in das optische Netz 3 eingespeist werden kann, d.h. insbesondere Fasern des optischen Netzes 3 durch die Lichtquelle 50 beleuchtbar sind, ist die Lichtquelle 50 gemäß Figur 3 über den ersten Netzanschluss 11, eine dem ersten Netzanschluss 11 zugeordnete Verbindungsstrecke 14 und den der Verbindungsstrecke 14 und dem ersten Netzanschluss 11 zugeordneten Geräteanschluss 21 verbunden. Durch die Ausbildung des Lichtanschlusses 51 gemäß der Geräteanschlussart 4.1 kann eine Zuschaltung einer der Streckenverlängerungen 22 und/oder die Auswahl eines der Netzanschlüsse 11, 12, 13 in einfacher Art und Weise, insbesondere durch dasselbe Verbindungsmittel 16, ermöglicht werden. Zu Aktivierung und/oder Deaktivierung der Lichtquelle 50 ist ferner ein Schalter 53 an der Trägereinheit 30 angeordnet. Vorzugsweise ist eine Elektronik (nicht dargestellt) zum Betrieb der Lichtquelle 50 an der zweiten Seite 32 der Trägereinheit 30 angeordnet.

Zur mobilen Stromversorgung der Lichtquelle 50 ist ferner eine Energieversorgungseinheit 52 vorgesehen. Dazu kann die Energieversorgungseinheit 52 eine Batterie und/oder einen Akku umfassen. Ferner weist das Gehäuse 40 eine Zugangsöffnung 44 zum Zugang zur Energieversorgungseinheit 52 auf. Beispielsweise kann ein Batterieaustausch und/oder ein Ladevorgang für die Energieversorgungseinheit 52 durch die Zugangsöffnung 44 ermöglicht sein.

Vorzugsweise ist die Trägereinheit 30 als Informationsträger mit Informationen zum Hinweis auf eine Bedienung ausgebildet. Dazu weist die Trägereinheit 30 Vertiefungen 33 auf, die die Informationen abbilden. Die Vertiefungen 33 können in einen Trägerkörper der Trägereinheit 30 eingefräst oder eingelasert sein. Insbesondere können die Vertiefungen 33 auf die jeweilige Netzanschlussart 2.1, 2.2, 2.3 der Netzanschlüsse 11, 12, 13, die Lichtquelle 50, die Geräteanschlussart 4.1 und/oder die Streckenverlängerungen 22 hinweisen. Besonders bevorzugt bilden die Vertiefungen 33 die Verbindungsstrecken 14 ab, um die Geräteanschlüsse 21 den Netzanschlüssen 11, 12, 13 zuordnen zu können.

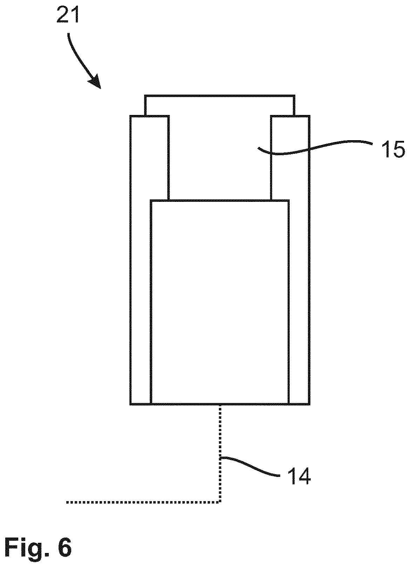

Figur 6 zeigt ferner einen der Geräteanschlüsse 21 mit einem lösbaren Abdeckmittel 15 in Form einer Staubkappe. Das Abdeckmittel 15 kann zur Nutzung des Geräteanschlusses 21 abnehmbar sein. Vorzugsweise weisen sämtliche Netzanschlüsse 11, 12, 13, Geräteanschlüsse 21 und der Lichtanschluss 51 jeweils ein Abdeckmittel 15 auf.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert ohne jedoch den Rahmen der beigefügten Ansprüche zu verlassen.

### Bezugszeichenliste

- 1: Adaptervorrichtung
- 2: erster Zugangspunkt
- 2.1: erste Netzanschlussart
- 2.2: zweite Netzanschlussart
- 2.3: weitere Netzanschlussart
- 3: optisches Netz
- 4: Verbindungsanschluss
- 4.1: Geräteanschlussart
- 5: Gerät
- 6: zweiter Zugangspunkt

- 10: Netzanschlusseinheit
- 11: erster Netzanschluss
- 12: zweiter Netzanschluss
- 13: weiterer Netzanschluss
- 14: Verbindungsstrecke
- 15: Abdeckmittel
- 16: Verbindungsmittel

- 20: Geräteanschlusseinheit
- 21: Geräteanschluss
- 22: Streckenverlängerung
- 23: Vorlaufstrecke
- 24: Nachlaufstrecke
- 25: Zwischenanschluss

- 30: Trägereinheit
- 31: erste Seite
- 32: zweite Seite
- 33: Vertiefungen
- 34: Verkabelung
- 40: Gehäuse
- 41: Bodenelement
- 42: Deckelelement
- 43: Staufach
- 44: Zugangsöffnung
- 45: Verschluss
- 46: Tragegriff
- 47: Hohlraum
- 48: Befestigungsschnittstelle

- 50: Lichtquelle
- 51: Lichtanschluss
- 52: Energieversorgungseinheit
- 53: Schalter

- 101: Verbinden
- 102: Verbinden

## Patentansprüche

1. Adaptervorrichtung (1) zum mobilen Herstellen einer lichtleitenden Verbindung eines ersten optischen Zugangspunktes (2) eines optischen Netzes (3), insbesondere in Form eines Glasfasernetzes, zum Anschluss einer ersten Netzanschlussart (2.1) mit einem optischen Verbindungsanschluss (4) eines Gerätes (5) zum Anschluss einer Geräteanschlussart (4.1) aufweisend
eine Netzanschlusseinheit (10) mit einem ersten Netzanschluss (11) der ersten Netzanschlussart (2.1) zur lichtleitenden Verbindung mit dem ersten Zugangspunkt (2) und einem zweiten Netzanschluss (12) einer zweiten Netzanschlussart (2.2) zur lichtleitenden Verbindung mit einem zweiten optischen Zugangspunkt (6), und
eine Geräteanschlusseinheit (20) mit zumindest einem Geräteanschluss (21) der Geräteanschlussart (4.1) zur lichtleitenden Verbindung mit dem Gerät (5), und
eine Trägereinheit (30), an welcher der erste und der zweite Netzanschluss (12) und der Geräteanschluss (4.1) angeordnet sind,
wobei der erste und zweite Netzanschluss (11, 12) durch jeweils zumindest eine Verbindungsstrecke (14) mit der Geräteanschlusseinheit (20) lichtleitend verbunden sind,
**dadurch gekennzeichnet, dass**, sich die erste und zweite Netzanschlussart (11, 12) voneinander unterscheiden.

2. Adaptervorrichtung (1) nach Anspruch 1,
**dadurch gekennzeichnet,**
**dass** die Geräteanschlusseinheit (20) eine Streckenverlängerung (22) zur Verlängerung eines Lichtlaufs der Verbindungsstrecken (14) aufweist, insbesondere wobei die Streckenverlängerung (22) als optische Vorlaufstrecke (23) und/oder als optische Nachlaufstrecke (24) ausgestaltet ist.

3. Adaptervorrichtung (1) nach Anspruch 2,
**dadurch gekennzeichnet,**
**dass** die Streckenverlängerung (22) einen Zwischenanschluss (25) aufweist, durch den die Streckenverlängerung (22) wahlweise mit einer der Verbindungsstrecken (14) verbindbar ist, und/oder dass durch einen Endanschluss der Streckenverlängerung (22) ein Geräteanschluss (21) zur lichtleitenden Verbindung mit dem Gerät (5) gebildet ist.

4. Adaptervorrichtung (1) nach einem der vorhergehenden Ansprüche,
**dadurch gekennzeichnet,**
**dass** ein tragbares Gehäuse (40) vorgesehen ist, in welchem die Trägereinheit (30) angeordnet ist, insbesondere wobei das Gehäuse (40) aus einem Kunststoff ausgebildet ist.

5. Adaptervorrichtung (1) nach Anspruch 4,
**dadurch gekennzeichnet,**
**dass** das Gehäuse (40) ein Bodenelement (41), an welchem die Trägereinheit (30) angeordnet ist, und ein Deckelelement (42), welches zum Zugang zur Trägereinheit (30) zumindest teilweise vom Bodenelement (41) entfernbar ist, aufweist, insbesondere wobei das Bodenelement (41) und die Trägereinheit (30) einen Hohlraum (47) bilden.

6. Adaptervorrichtung (1) nach einem der Ansprüche 4 oder 5,
**dadurch gekennzeichnet,**
**dass** das Gehäuse (40), insbesondere das Deckelelement (42), zumindest ein Staufach (43) zur Aufnahme loser Zubehörteile aufweist.

7. Adaptervorrichtung (1) nach einem der vorhergehenden Ansprüche,
**dadurch gekennzeichnet,**
**dass** die Netzanschlüsse (11, 12, 13) der Netzanschlusseinheit (10) und/oder der zumindest eine Geräteanschluss (21) jeweils ein lösbares Abdeckmittel (15) zum Schutz vor Umwelteinflüssen aufweisen.

8. Adaptervorrichtung (1) nach einem der vorhergehenden Ansprüche,
**dadurch gekennzeichnet,**
**dass** an der Trägereinheit (30) mehrere weitere Netzanschlüsse (13) unterschiedlicher, weiterer Netzanschlussarten (2.3) vorgesehen sind, wobei jeder der weiteren Netzanschlüsse (13) durch jeweils eine weitere Verbindungsstrecke (14) mit der Geräteanschlusseinheit (20) verbunden ist.

9. Adaptervorrichtung (1) nach einem der vorhergehenden Ansprüche,
**dadurch gekennzeichnet,**
**dass** die Geräteanschlusseinheit (20) zwei oder mehr Geräteanschlüsse (21) der Geräteanschlussart (4.1) aufweist, wobei von jedem der Netzanschlüsse (11, 12, 13) der Netzanschlusseinheit (10) eine Verbindungsstrecke (14) zu zumindest einem der Geräteanschlüsse (21) der Geräteanschlusseinheit (20) vorgesehen ist.

10. Adaptervorrichtung (1) nach einem der vorhergehenden Ansprüche,
**dadurch gekennzeichnet,**
**dass** an der Trägereinheit (30) eine Lichtquelle (50), vorzugsweise in Form einer Laserlichtquelle, zum Einspeisen von Licht in das optische Netz (3) vorgesehen ist, insbesondere wobei die Lichtquelle (50) mit einem Lichtanschluss (51) verbunden ist, der gemäß der Geräteanschlussart (4.1) ausgebildet ist, so dass Licht der Lichtquelle (50) über den Lichtanschluss (51) übertragbar ist.

11. Adaptervorrichtung (1) nach Anspruch 10,
**dadurch gekennzeichnet,**
**dass** eine Energieversorgungseinheit (52) zur mobilen Energieversorgung der Lichtquelle (50) vorgesehen ist, insbesondere wobei das Gehäuse (40) eine Zugangsöffnung (44) zum Zugang zur Energieversorgungseinheit (52) aufweist.

12. Adaptervorrichtung (1) nach einem der vorhergehenden Ansprüche,
**dadurch gekennzeichnet,**
**dass** die Trägereinheit (30) eine erste Seite (31), an welcher die Netzanschlüsse (11, 12, 13) der Netzanschlusseinheit (10) und der zumindest eine Geräteanschluss (21) der Geräteanschlusseinheit (20) angeordnet sind, und eine zweite Seite (32), an welcher die Verbindungsstrecken (14) und/oder die Lichtquelle (50) angeordnet sind, aufweist.

13. Adaptervorrichtung (1) nach einem der vorhergehenden Ansprüche,
**dadurch gekennzeichnet,**
**dass** die Trägereinheit (30) als Informationsträger mit Informationen zum Hinweis auf eine Bedienung der Adaptervorrichtung (1) ausgebildet ist, wobei die Informationen als Vertiefungen (33) in die Trägereinheit (30) eingebracht sind.

14. System umfassend
ein Gerät (5) mit einem optischen Verbindungsanschluss (4) zum Anschluss einer Geräteanschlussart (4.1)
und eine Adaptervorrichtung (1) nach einem der vorhergehenden Ansprüche zum mobilen Herstellen einer lichtleitenden Verbindung eines ersten optischen Zugangspunktes (2) eines optischen Netzes (3), insbesondere in Form eines Glasfasernetzes, zum Anschluss einer ersten Netzanschlussart (2.1) mit dem Verbindungsanschluss (4) des Gerätes (5).

15. Verfahren zum mobilen Herstellen einer lichtleitenden Verbindung eines ersten optischen Zugangspunktes (2) zum Anschluss einer ersten Netzanschlussart (2.1) mit einem optischen Verbindungsanschluss (4) einer Geräteanschlussart (4.1) eines Gerätes (5) umfassend die folgenden Schritte:
- Verbinden (101) des ersten Zugangspunktes (2) mit einer Adaptervorrichtung (1) nach einem der Ansprüche 1 bis 13,
- Verbinden (102) der Adaptervorrichtung (1) mit dem Verbindungsanschluss (4) des Gerätes (5).

## Claims

1. Adapter device (1) for the mobile establishment of an optical connection of a first optical access point (2) of an optical network (3), in particular in the form of a fiber optic network, for connecting a first type of network connection (2.1) to an optical connection port (4) of a device (5) for connecting a device connection type (4.1), having
a network connection unit (10) with a first network connection (11) of the first network connection type (2.1) for optical connection to the first access point (2) and a second network connection (12) of a second network connection type (2.2) for optical connection to a second optical access point (6), and
a device connection unit (20) with at least one device connection (21) of the device connection type (4.1) for light-conducting connection to the device (5), and
a carrier unit (30) on which the first and second network connections (12) and the device connection (4.1) are arranged,
wherein the first and second network connections (11, 12) are each connected to the device connection unit (20) in a light-conducting manner by at least one connecting path (14),
**characterized in that**
the first and second network connection types (11, 12) differ from each other.

2. Adapter device (1) according to claim 1,
**characterized in that**
the device connection unit (20) has a path extension (22) for extending a light path of the connecting paths (14), in particular wherein the path extension (22) is designed as an optical leading path (23) and/or as an optical trailing path (24).

3. Adapter device (1) according to claim 2,
**characterized in that**
the path extension (22) has an intermediate connection (25), by means of which the path extension (22) can be optionally connected to one of the connecting paths (14), and/or **in that** a device connection (21) for light-conducting connection to the device (5) is formed by an end connection of the path extension (22).

4. Adapter device (1) according to one of the preceding claims,
**characterized in that**
a portable housing (40) is provided, in which the carrier unit (30) is arranged, in particular wherein the housing (40) is formed from a plastic.

5. Adapter device (1) according to claim 4,
**characterized in that**
the housing (40) has a base element (41), on which the carrier unit (30) is arranged, and a cover element (42), which can be at least partially removed from the base element (41) for access to the carrier unit (30), in particular wherein the base element (41) and the carrier unit (30) form a cavity (47).

6. Adapter device (1) according to any one of claims 4 or 5,
**characterized in that**
the housing (40), in particular the cover element (42), has at least one storage compartment (43) for accommodating loose accessories.

7. Adapter device (1) according to one of the preceding claims,
**characterized in that**
the network connections (11, 12, 13) of the network connection unit (10) and/or the at least one device connection (21) each have a detachable covering means (15) for protection against environmental influences.

8. Adapter device (1) according to one of the preceding claims,
**characterized in that**
a plurality of further network connections (13) of different, further types of network connection (2.3) are provided on the carrier unit (30), each of the further network connections (13) being connected to the device connection unit (20) by a further connecting path (14) in each case.

9. Adapter device (1) according to one of the preceding claims,
**characterized in that**
the device connection unit (20) has two or more device connections (21) of the device connection type (4.1), a connecting path (14) being provided from each of the network connections (11, 12, 13) of the network connection unit (10) to at least one of the device connections (21) of the device connection unit (20).

10. Adapter device (1) according to one of the preceding claims,
**characterized in that**
a light source (50), preferably in the form of a laser light source, is provided on the carrier unit (30) for feeding light into the optical network (3), in particular the light source (50) being connected to a light connection (51) which is designed in accordance with the device connection type (4.1), so that light from the light source (50) can be transmitted via the light connection (51).

11. Adapter device (1) according to claim 10,
**characterized in that**
a power supply unit (52) is provided for the mobile power supply of the light source (50), in particular wherein the housing (40) has an access opening (44) for access to the power supply unit (52).

12. Adapter device (1) according to one of the preceding claims,
**characterized in that**
the carrier unit (30) has a first side (31), on which the network connections (11, 12, 13) of the network connection unit (10) and the at least one device connection (21) of the device connection unit (20) are arranged, and a second side (32), on which the connecting paths (14) and/or the light source (50) are arranged.

13. Adapter device (1) according to one of the preceding claims,
**characterized in that**
the carrier unit (30) is designed as an information carrier with information for indicating an operation of the adapter device (1), the information being introduced into the carrier unit (30) as recesses (33).

14. System comprising
a device (5) with an optical connection port (4) for connecting a device connection type (4.1) and an adapter device (1) according to one of the preceding claims for the mobile establishment of an optical connection of a first optical access point (2) of an optical network (3), in particular in the form of a fiber optic network, for connecting a first type of network connection (2.1) to the connection port (4) of the device (5).

15. Method for the mobile establishment of an optical connection of a first optical access point (2) for connecting a first network connection type (2.1) to an optical connection port (4) of a device connection type (4.1) of a device (5), comprising the following steps:
- connecting (101) the first access point (2) to an adapter device (1) according to any one of claims 1 to 13,
- connecting (102) the adapter device (1) to the connection port (4) of the device (5).

## Revendications

1. Dispositif adaptateur (1) pour la réalisation mobile d'une liaison optique d'un premier point d'accès optique (2) d'un réseau optique (3), en particulier sous la forme d'un réseau de fibres optiques, pour le raccordement d'un premier type de raccordement au réseau (2.1) avec un raccordement de liaison optique (4) d'un appareil (5) pour le raccordement d'un type de raccordement d'appareil (4.1), présentant
une unité de raccordement au réseau (10) avec un premier raccordement au réseau (11) du premier type de raccordement au réseau (2.1) pour la liaison par fibre optique avec le premier point d'accès (2) et un deuxième raccordement au réseau (12) d'un deuxième type de raccordement au réseau (2.2) pour la liaison par fibre optique avec un deuxième point d'accès optique (6), et
une unité de raccordement d'appareil (20) avec au moins un raccordement d'appareil (21) du type de raccordement d'appareil (4.1) pour la liaison conductrice de lumière avec l'appareil (5), et
une unité de support (30), sur laquelle sont disposés le premier et le deuxième raccordement au réseau (12) et le raccordement à l'appareil (4.1),
la première et la deuxième raccordement au réseau (11, 12) étant reliées de manière photoconductrice à l'unité de raccordement d'appareil (20) par respectivement au moins une parcour de liaison (14),
**caractérisé en ce que**
le premier et le deuxième type de raccordement au réseau (11, 12) se distinguent l'un de l'autre.

2. Dispositif adaptateur (1) selon la revendication 1,
**caractérisé en ce que**
l'unité de raccordement d'appareil (20) présente un prolongement de parcours (22) pour prolonger un parcours lumineux des parcours de liaison (14), en particulier le prolongement de parcours (22) étant conçu comme parcours optique d'aller (23) et/ou comme parcours optique de retour (24).

3. Dispositif adaptateur (1) selon la revendication 2,
**caractérisé en ce que**
le prolongement de parcour (22) présente un raccordement intermédiaire (25) par lequel le prolongement de parcour (22) peut être relié au choix à l'une des parcours de liaison (14), et/ou **en ce qu'**un raccordement d'appareil (21) est formé par un raccordement d'extrémité du prolongement de parcour (22) pour la liaison conductrice de lumière avec l'appareil (5).

4. Dispositif adaptateur (1) selon l'une des revendications précédentes,
**caractérisé en ce qu'**
il est prévu un boîtier portable (40) dans lequel est disposée l'unité de support (30), en particulier le boîtier (40) étant réalisé en une matière plastique.

5. Dispositif adaptateur (1) selon la revendication 4,
**caractérisé en ce que**
le boîtier (40) présente un élément de fond (41), sur lequel est disposée l'unité de support (30), et un élément de couvercle (42), qui peut être enlevé au moins partiellement de l'élément de fond (41) pour accéder à l'unité de support (30), en particulier l'élément de fond (41) et l'unité de support (30) formant un espace creux (47).

6. Dispositif adaptateur (1) selon l'une des revendications 4 ou 5,
**caractérisé en ce que**
le boîtier (40), en particulier l'élément de couvercle (42), présente au moins un compartiment de rangement (43) pour recevoir des accessoires détachés.

7. Dispositif adaptateur (1) selon l'une des revendications précédentes,
**caractérisé en ce que**
les raccordements au réseau (11, 12, 13) de l'unité de raccordement au réseau (10) et/ou l'au moins un raccordement d'appareil (21) présentent chacun un moyen de recouvrement (15) amovible pour la protection contre les influences de l'environnement.

8. Dispositif adaptateur (1) selon l'une des revendications précédentes,
**caractérisé en ce que**
plusieurs autres raccordements au réseau (13) de différents autres types de raccordement au réseau (2.3) sont prévus sur l'unité de support (30), chacun des autres raccordements au réseau (13) étant relié à l'unité de raccordement d'appareil (20) par respectivement une autre parcour de liaison (14).

9. Dispositif adaptateur (1) selon l'une des revendications précédentes,
**caractérisé en ce que**
l'unité de raccordement d'appareil (20) présente deux ou plusieurs raccordements d'appareil (21) du type de raccordement d'appareil (4.1), un parcour de liaison (14) étant prévu de chacun des raccordements de réseau (11, 12, 13) de l'unité de raccordement de réseau (10) vers au moins un des raccordements d'appareil (21) de l'unité de raccordement d'appareil (20).

10. Dispositif adaptateur (1) selon l'une des revendications précédentes,
**caractérisé en ce qu'**
une source de lumière (50), de préférence sous la forme d'une source de lumière laser, est prévue sur l'unité de support (30) pour alimenter en lumière le réseau optique (3), en particulier la source de lumière (50) étant reliée à un raccordement de lumière (51) qui est réalisé selon le type de raccordement d'appareil (4.1), de sorte que la lumière de la source de lumière (50) peut être transmise via le raccordement de lumière (51).

11. Dispositif adaptateur (1) selon la revendication 10,
**caractérisé en ce qu'**
une unité d'alimentation en énergie (52) est prévue pour l'alimentation en énergie mobile de la source lumineuse (50), en particulier le boîtier (40) présentant une ouverture d'accès (44) pour accéder à l'unité d'alimentation en énergie (52).

12. Dispositif adaptateur (1) selon l'une des revendications précédentes,
**caractérisé en ce que**
l'unité de support (30) présente un premier côté (31) sur lequel sont disposés les raccordements au réseau (11, 12, 13) de l'unité de raccordement au réseau (10) et le au moins un raccordement d'appareil (21) de l'unité de raccordement d'appareil (20), et un deuxième côté (32) sur lequel sont disposés les parcours de liaison (14) et/ou la source lumineuse (50).

13. Dispositif adaptateur (1) selon l'une des revendications précédentes,
**caractérisé en ce que**
l'unité de support (30) est réalisée sous forme de support d'informations avec des informations pour indiquer une commande du dispositif adaptateur (1), les informations étant introduites sous forme de creux (33) dans l'unité de support (30).

14. Système comprenant
un appareil (5) avec un raccordement de liaison optique (4) pour la connexion d'un type de raccordement d'appareil (4.1)
et un dispositif adaptateur (1) selon l'une des revendications précédentes pour établir de manière mobile une liaison optique d'un premier point d'accès optique (2) d'un réseau optique (3), notamment sous la forme d'un réseau de fibres optiques, pour le raccordement d'un premier type de raccordement au réseau (2.1) avec le raccordement de liaison (4) de l'appareil (5).

15. Procédé pour établir de manière mobile une liaison optique d'un premier point d'accès optique (2) pour le raccordement d'un premier type de raccordement au réseau (2.1) avec un raccordement de liaison optique (4) d'un type de raccordement d'appareil (4.1) d'un appareil (5), comprenant les étapes suivantes :
- connecter (101) le premier point d'accès (2) à un dispositif adaptateur (1) selon l'une quelconque des revendications 1 à 13,
- relier (102) le dispositif adaptateur (1) au raccordement de liaison (4) de l'appareil (5).
